# EUROPÄISCHE PATENTSCHRIFT

(11) **EP 1 241 471 B1**
(45) Veröffentlichungstag und Bekanntmachung des Hinweises auf die Patenterteilung: **20.12.2006**
(21) Anmeldenummer: 01106199.1
(22) Anmeldetag: 14.03.2001
(51) Int. Cl.: G01N 27/30

(54) **Referenzelektrode, Messkette mit einer Referenzelektrode und Verfahren zum Herstellen einer Referenzelektrode**
Reference electrode, measuring system with a reference electrode and method for producing a reference electrode
Electrode de référence, chaîne de mesure avec une électrode de référence et procédé pour fabriquer une électrode de référence

(43) Veröffentlichungstag der Anmeldung: 18.09.2002
(73) Patentinhaber: Metroglas AG, 8910 Affoltern a.A. (CH)
(72) Erfinder: Züst, Christian Dr., 3037 Herrenschwanden (CH); Böck, Christian, 8926 Kappel a. A. (CH); Aeberhard, David, 3422 Kirchberg (CH)
(74) Vertreter: Müller, Christoph Emanuel

(56) Entgegenhaltungen:
- CH-A- 426 314
- DE-A- 2 319 352
- DE-A- 3 702 501
- DE-A- 19 639 372
- US-A- 3 530 849
- US-A- 5 139 641

## Beschreibung

Die Erfindung betrifft eine Referenzelektrode, eine Messkette mit einer solchen Referenzelektrode und ein Verfahren zum Herstellen einer Referenzelektrode mit den Merkmalen des Oberbegriffs der unabhängigen Patentansprüche.

Bei vielen elektrochemischen Sensoren wird die Messung mittels einer Referenzelektrode mit einem bekannten Potential durchgeführt. Das Bezugssystem (eine Elektrode zweiter Art wie Ag/AgCl) steht dabei in Kontakt mit einem Elektrolyt mit konstanter Zusammensetzung (3MKCl). Die leitende Verbindung zur Messlösung wird durch ein Diaphragma hergestellt. Damit das Diaphragmapotential (Henderson- und Donnanpotential) möglichst klein bleibt, arbeitet man bei präzisen Messungen mit einem offenen System. Der Elektrolyt kann dabei über den hydrostatischen Druck durch das Diaphragma ausfliessen. Der Elektrolytausfluss verhindert ein Eindringen der Messlösung in die Referenzelektrode. Durch den Elektrolytfluss wird auch das Diaphragma vor Verschmutzung geschützt.

Ein Nachteil von Referenzelektroden mit einem solchen Elektrolytausfluss ist, dass diese wartunsintensiv sind. In der Praxis verwendet man deshalb oft sogenannte geschlossene Systeme, in denen der Elektrolyt verdickt wird.

Auch diese wartungsarmen Elektroden weisen verschiedene Nachteile auf. Auf Grund des fehlenden Elektrolytausflusses ist das Diaphragmapotential unstabil. Das Ansprechverhalten ist träge. Auf Grund der Möglichkeit der Kontamination des Referenzelektrolyten mit der Messlösung ist die Lebensdauer begrenzt. Dies ist insbesondere ein Problem bei Sensoren, die in der Biotechnologie eingesetzt werden, wo beispielsweise während der Fermentation ein Gegendruck von bis zu 2,5 bar auftreten kann. Dadurch besteht die Gefahr, dass das Medium durch das Diaphragma in den Elektrolyten eindringt.

Insbesondere für Sensoren, die in der Biotechnologie eingesetzt werden, wird Glas als Material bevorzugt. Sensoren mit einem Glasschaft können zwar auf Grund der geringen Wärmeausdehnung und Flexibilität des Glases nicht vollständig mit einem Elektrolyt gefüllt werden. Sie benötigen auf Grund der Wärmeausdehnung des Gelelektrolyten ein Luftpolster. Ein Sensor mit einem Kunststoffschaft könnte ohne solche Luftpolster betrieben werden. Der Gebrauch von Kunststoffen ist jedoch für die Kultivierung von Zellen wegen der Möglichkeit der Kontamination mit herausdiffundierenden Additiven problematisch.

Vor allem beim Einsatz in der Biotechnologie werden solche Elektroden autoklaviert. Dabei besteht die Gefahr, dass der Elektrolyt während des Abkühlvorgangs auf Grund der Wärmeausdehnung mit dem Medium verdünnt wird.

Aus DE 3 702 501 A1 ist deshalb eine sterilisierbare pH-Messkette bekannt, bei der eine Bezugselektrode einen Hohlraum aufweist, in den eine gasdichte Zuführung für ein Gas einmündet. Durch die Zuführung kann im Hohlraum ein Gas eingeführt werden, wodurch im Hohlraum ein Überdruck erzeugt wird. Die Zuführung wird anschliessend gasdicht verschlossen. Durch dieses Druckpolster wird vermieden, dass das Diaphragma und der Elektrolyt durch die Messlösung kontaminiert wird. Die Lösung gemäss DE 3 702 501 ist aber mit verschiedenen Nachteilen behaftet. Insbesondere ist die Lebensdauer einer solchen Elektrode begrenzt.

Weil die Elektrode im Bereich des Diaphragmas nicht gasdicht abgeschlossen ist, nimmt der Überdruck im Hohlraum laufend ab, auch wenn die Elektrode nicht benutzt wird. Das Einsetzen einer Platinkapillare in die Elektrode ist ausserdem aufwendig.

Aus DE 186 39 372 A1 ist eine Vorrichtung für elektrochemische Messverfahren bekannt, wobei eine Kapillare vorgesehen ist, durch die ein gleichmässiger Ausfluss von Elektrolyt gewährleistet ist. Beim Ansteigen des Umgebungsdruckes wird durch die offene Seite, an der eine Feder auf einen Kolben wirkt, erreicht, dass jeweils auf beiden Enden des Elektrolyts der gleiche Druck wirkt, so dass die Druckdifferenz zwischen der Innenseite der Elektrode und der Aussenseite permanent ausgewogen ist. Zusätzlich erzeugt die Feder einen kontrollierten Ausfluss von Elektrolyt, der unabhängig vom Umgebungsdruck und der Lage der Elektrode ist.

Dokument DE 2 319 352 offenbart eine Bezugselektrode zur Potentialmessung an Elektroden elektrochemischer Systeme, wobei sich bei der Verwendung der Elektrode in Hydrazinhaltigem Elektrolyten der in die Elektrode einströmende Hydrazinhaltige Elektrolyt an Quecksilberoxid in Stickstoff und Wasser zersetzt wird und sich durch diese Gasbildung eine automatische Gegenspülung des Diaphragmas ergibt.

Es ist deshalb eine Aufgabe der vorliegenden Erfindung, die Nachteile des Bekannten zu vermeiden. Insbesondere soll eine Referenzelektrode, eine Messkette mit einer solchen Referenzelektrode und ein Verfahren zum Herstellen einer solchen Referenzelektrode geschaffen werden, bei welchen die Standzeit der Referenzelektrode erhöht wird. Die Referenzelektrode soll ausserdem auf einfache Weise wirtschaftlich herstellbar sein.

Erfindungsgemäss werden diese Aufgaben mit einer Referenzelektrode, einer Messkette und einem Verfahren zum Herstellen einer Referenzelektrode mit den Merkmalen des kennzeichnenden Teils der unabhängigen Patentansprüche gelöst.

Die erfindungsgemässe Referenzelektrode besteht im wesentlichen aus einem Gehäuse aus einem gasdichten Material. Typischerweise werden Glas oder Kunststoff verwendet.

Das Gehäuse ist teilweise mit einem gel- oder pastenförmigen Elektrolyten gefüllt. Unter gel- oder pastenförmigen Elektrolyten wird in diesem Zusammenhang ein Elektrolyt verstanden, der durch die Zugabe eines Hilfsstoffes verdickt wurde und dabei eine Viskosität von > 1000 cp bei 25°C aufweist. Der Elektrolyt ist in bekannter Weise über ein Diaphragma im Gehäuse mit einem Messmedium in Kontakt bringbar. Im Gehäuse ist ein Hohlraum angeordnet, der in Kontakt mit dem Elektrolyten steht. Dieses Gaspolster erlaubt eine Ausdehnung des Elektrolyten ohne Zerstörung des Gehäuses, auch wenn die Elektrode beispielsweise zum Autoklavieren erhitzt wird.

Solche Elektroden werden üblicherweise auch als Druckpastensensoren oder Druckpastenelektroden bezeichnet.

Erfindungsgemäss ist der Hohlraum der Referenzelektrode gasdicht verschlossen. Das Gehäuse weist im Innern Mittel zum Erzeugen eines Überdrucks im Hohlraum auf. Die Mittel sind im Innern des verschlossenen Gehäuses angeordnet.

Die erfindungsgemässe Lösung gemäß Anspruch 1 weist verschiedene Vorteile auf. Der Hohlraum kann problemlos verschlossen werden, beispielsweise durch Zuschmelzen des Glasgehäuses. Eine separate Zufuhr für Druckluft ist nicht notwendig. Ein weiterer Vorteil der erfindungsgemässen Referenzelektrode besteht darin, dass die Referenzelektrode bei entsprechend ausgewählten Mitteln zum Erzeugen des Überdrucks unmittelbar vor dem Einsatz aktiviert werden kann. Eine Lagerung der Referenzelektrode verkürzt deshalb deren Standzeit nicht. Besonders vorteilhaft sind deshalb die Mittel zum Erzeugen eines Überdrucks durch ein aktivierbares System gebildet.

Grundsätzlich sind mechanische Systeme mit einer Druckfeder denkbar. Aus Kostengründen wird aber gemäß der Erfindung ein aktivierbares chemisches System bevorzugt, das bei Aktivierung ein Gas abspaltet. Dadurch ist es insbesondere möglich, das System selektiv zu aktivieren, beispielsweise wenn der Überdruck im Hohlraum unter einen geforderten Wert gesunken ist.

In diesem Zusammenhang ist es denkbar, zusätzlich Mittel vorzusehen, die den Grad des Überdrucks im Hohlraum anzeigen. Sobald der Überdruck unter einem bestimmten Wert gesunken ist, weiss der Benutzer, dass das System erneut aktiviert werden muss, damit der Überdruck im Hohlraum wieder erhöht wird.

Der Druck kann beispielsweise durch ein einseitig zugeschmolzenes Kapillarrohr angezeigt werden, welches mit der Öffnung nach unten in die Elektrode eintaucht. Bei Druckzunahme dringt der pastenförmige Elektrolyt in die Kapillare ein. Das Verhältnis der Kapillarlänge zur Eindringtiefe der Flüssigkeit ist somit ein Mass für den veränderten Druck im System. Der Druck kann deshalb auf einfache Weise kontrolliert werden.

Die Reaktion sollte anfänglich gehemmt sein, so dass ausreichend Zeit bleibt, um den Hohlraum gasdicht zu verschliessen. Die Reaktion kann beispielsweise durch Zufuhr von Wärme ausgelöst werden.

Typischerweise ist das chemische System entweder durch Energiezufuhr von Aussen oder durch eine Reaktion zweier anfänglich getrennten Substanzen aktivierbar. In beiden Fällen kann das chemische System einfach auch bei gasdicht verschlossenem Hohlraum von Aussen her aktiviert werden.

Es ist vorteilhaft, das chemische System durch Zufuhr von thermischer, elektrischer und/oder elektromagnetischer Energie zu aktivieren. Aktivierung durch Zufuhr von Wärme ist besonders im Zusammenhang mit Referenzelektroden, die in der Biotechnologie eingesetzt werden, vorteilhaft. Solche Referenzelektroden werden durch eine Wärmebehandlung sterilisiert. Ein thermisch aktivierbares chemisches System erlaubt es deshalb, den gewünschten Überdruck automatisch erst bei der Sterilisierung zu erzeugen. Das chemische System kann sowohl im Hohlraum angeordnet als auch mit dem Elektrolyten vermischt werden.

Denkbar ist es aber auch, ein Gas durch eine Reaktion eines Zweikomponenten-Systems zu erzeugen.

Die zwei Komponenten sind getrennt voneinander im Gehäuse angeordnet und sind bei Bedarf im Kontakt miteinander bringbar. Dazu wäre es beispielsweise denkbar, zwei Komponenten mit einer Trennwand voneinander zu trennen, wobei die Trennwand von Aussen her zerstörbar ist.

Gemeinsam ist bei diesen verschiedenen Ausführungsformen, dass im Hohlraum ein Überdruck erzeugt wird, indem ein Stoff zur Reaktion gebracht wird und dabei ein Gas abspaltet.

Die Mittel zum Erzeugen eines Überdrucks sind vorteilhaft so ausgewählt, dass ein Überdruck in der Grössenordnung von 0,5 bis 2 Bar erzeugt wird.

Der Vorteil besteht darin, dass auch bei der Autoklavierung bei üblichen Betriebsbedingungen und bei typischen Elektrodendimensionen ein Bersten des Gehäuses vermieden wird.

Vorteilhaft wird das chemische System ausserdem derart ausgewählt, dass als Gas wenigstens ein inertes Gas wie z.B. CO2, oder N2 abgespaltet wird. Der Vorteil eines inerten Gases liegt darin, dass es weder entzündbar noch toxisch ist.

Vorteilhaft ist das System ausserdem so ausgewählt, dass die Reaktionsprodukte ungiftig sind. Ungiftig heisst in diesem Zusammenhang ungiftig gemäss der schweizerischen Lebensmittelverordnung.

Bevorzugt ist das System ausserdem so ausgewählt, dass es bei einer Temperatur von 75° bis 140° aktivierbar ist. Damit kann erreicht werden, dass der Überdruck automatisch bei der Autoklavierung der Elektrode erzeugt wird.

Gemäss einem bevorzugten Ausführungsbeispiel enthält das System Stoffe aus der Gruppe von Diphenyltriacen und organischen Carbonsäuren. Besonders bevorzugt sind Di-Carbonsäuren, beispielsweise Malonsäure.

Malonsäure wird bevorzugt, weil bei der Zersetzung nur Kohlendioxid und Essigsäure entsteht. Gleichzeitig wurde festgestellt, dass mit einer solchen Verbindung das Henderson-Potenzial in einer Messkette nicht beeinflusst wird.

Malonsäure ist besonders vorteilhaft, wenn sie mit dem Elektrolyt vermischt wird. Die Zersetzungsreaktion von Malonsäure in einem KCl-Gel, welches typischerweise als Elektrolyt verwendet wird, ist 1,8 Mal schneller als in reiner, fester Form.

Die Referenzelektrode kann getrennt von einer Messelektrode verwendet werden. Es ist aber auch denkbar, die erfindungsgemässe Referenzelektrode in eine Messkette mit einer Messelektrode zu integrieren.

Das erfindungsgemässe Verfahren gemäß Anspruch 12 zum Herstellen einer Referenzelektrode besteht im wesentlichen aus den folgenden Schritten: Zuerst wird ein Gehäuse aus einem gasdichten Material, beispielsweise Glas oder Kunststoff bereitgestellt, das ein Diaphragma aufweist. Anschliessend wird das Gehäuse teilweise mit einem gel- oder pastenförmigen Elektrolyten gefüllt, so dass oberhalb des Elektrolyten im Gehäuse ein Hohlraum gebildet wird. Ausserdem werden Mittel zum Erzeugen eines Überdrucks im Hohlraum in das Gehäuse eingeführt. Schliesslich wird der Hohlraum des Gehäuses gasdicht verschlossen.

Der Hohlraum kann beispielsweise durch Zuschmelzen des Gehäuses verschlossen werden. Vor dem Einsatz der Referenzelektrode werden die Mittel zum Erzeugen eines Überdrucks aktiviert, so dass im Hohlraum ein Überdruck entsteht.

Die Mittel zum Erzeugen eines Überdrucks können alternativ in den Hohlraum eingeführt werden oder wenigstens teilweise mit dem Elektrolyten vermischt werden.

Wenn die Mittel zum Erzeugen eines Überdrucks in den Hohlraum eingeführt werden ist es ausserdem sinnvoll, den Elektrolyten vom Hohlraum zu trennen, beispielsweise durch eine Dichtscheibe aus porösem Silikon.

Die Erfindung wird nachfolgend an Hand von Figuren und von Ausführungsbeispielen näher erläutert.
- Figur 1: zeigt eine schematische Darstellung einer Messkette mit einer erfindungsgemässen Referenzelektrode und
- Figur 2: den Druckverlauf in einem besonderen Ausführungsbeispiel

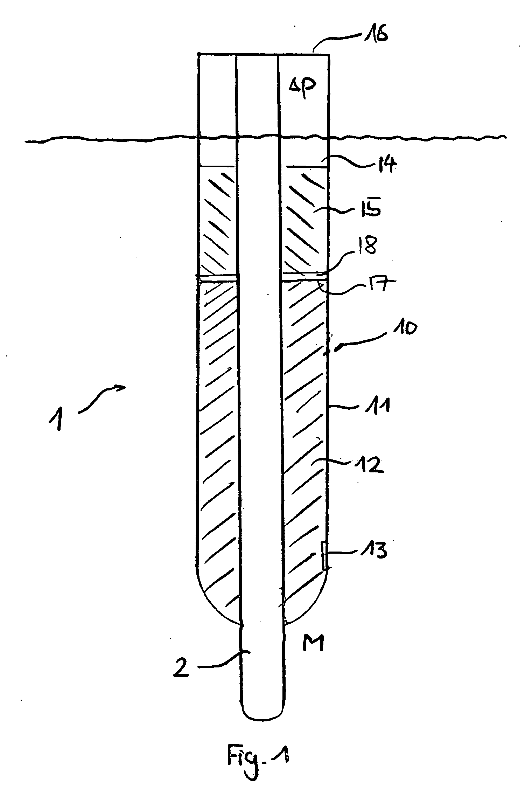

In Figur 1 ist eine Messkette 1 dargestellt, die im wesentlichen aus einer Messelektrode 2 (zum Beispiel ein PH-Membranglas oder ein ISFET-Sensor) und einer, die Messelektrode 2 umgebenden Referenzelektrode 10 besteht. Eine solche Elektrodenkonstruktion ist an sich bekannt. Sie ist beispielsweise in DE 3 702 501 beschrieben. Die Messelektrode 2 wird durch ein inneres, zylindrisches Glasröhrchen gebildet. Um die Messelektrode 2 ist konzentrisch ein ringförmiges Gehäuse 11 angeordnet, das die Referenzelektrode 10 bildet. Selbstverständlich sind aber im Rahmen der vorliegenden Erfindung andere geometrische Anordnungen denkbar. Insbesondere kann die Referenzelektrode 10 auch als einzelnes System eingesetzt werden.

In dem Gehäuse 11 der Referenzelektrode 10 ist ein Elektrolyt 12 eingefüllt. Der Elektrolyt 12 ist gel- oder pastenförmig. Typischerweise wird eine KCl-lösung als Elektrolyt, beispielsweise KCl-lösung gesättigt, versteift (6.2308.020) von Metrohm, Herisau, Schweiz, verwendet.

Das Gehäuse 11 ist aus Glas gebildet. In einem unteren Bereich ist im Gehäuse 11 ein Diaphragma 13 angeordnet. Das Diaphragma 13 erlaubt es, den Elektrolyten 12 in Kontakt mit dem, die Referenzelektrode 10 umgebenden Messmedium M zu bringen.

Oberhalb des Elektrolyten 12 ist ein Hohlraum 14 im Gehäuse 11 vorgesehen.

Im Gehäuse 11 (sind schematisch) Mittel 15 dargestellt, die zum Erzeugen eines Überdrucks _{Δ}P im Hohlraum 14 dienen. Der Hohlraum 14 bzw. das Gehäuse 11 im Bereich des Hohlraums 14 ist gasdicht verschlossen. Dies kann beispielsweise durch Verschmelzen einer Öffnung 16 der Referenzelektrode 10 nach der Befüllung mit dem Elektrolyt 12 und dem den Mitteln 15 erfolgen.

In bekannter Weise führen elektrische Ableitelemente vom Innern der Referenzelektrode 10 bzw. der Messelektrode 2 nach Aussen, die zum Messen des Potentials dienen. Die Ableitelemente sind nicht dargestellt. Deren Aufbau entspricht im Wesentlichen dem Aufbau gemäss DE 3 702 501.

Mit den Mitteln 15 zum Erzeugen eines Überdrucks _{Δ}P im gasdicht verschlossenen Hohlraum 14 kann ein bedrucktes Luftpolster im Hohlraum 14 erzeugt werden. Eine Kontamination der Referenzelektrode 10 bzw. des Elektrolyten 12 durch das Diaphragma 13 wird verhindert, weil auf Grund des Überdruckes _{Δ}P ständig Elektrolyt durch das Diaphragma hinausgedrückt wird. Durch Aktivierung der Mittel 15 zum Erzeugen eines Überdrucks kann das Luftpolster erst bei Bedarf erzeugt werden. Im Rahmen der vorliegenden Erfindung sind verschiedene Mittel zum Erzeugen eines Überdrucks verwendbar:

### Beispiel 1, welches nicht Teil der Erfindung ist:

Im Hohlraum ist eine Druckfeder angeordnet, die auf die Oberfläche 17 des Elektrolyten drückt. Für eine Betriebsdauer von 12 Monaten weist die Feder eine Federkonstante von 0,8 Kilogramm pro Zentimeter und eine Mindestlänge von 6,2cm auf. Das Volumen des Elektrolyten beträgt dabei 3,2ml. Zwischen der Feder und der Oberfläche des Elektrolyten wird eine Dichtfläche angeordnet.

Für die folgenden Beispiele 2 und 3 wird eine Referenzelektrode 10 mit den folgenden Parametern verwendet:

Das Volumen der Referenzelektrode beträgt 4,6 ml In die Referenzelektrode wird eine Elektrolytlösung (KCl-Gel von Metrohm 6.2308.030) eingefüllt. Dies entspricht einer Höhe von 12 cm. Das Volumen des Hohlraums oberhalb des Elektrolyt beträgt 3,3 ml, was einer Höhe des Hohlraums von 5 cm entspricht.

Als aktivierbare chemische Systeme werden Systeme gesucht, die bei einer Reaktion gasförmige Zersetzungsprodukte bilden. Üblicherweise soll die Reaktion bei zu Sterilisierung zur Fermentationsgeräten angewendeten Temperaturen ausgelöst werden. Sowohl die Ausgangsstoffe als auch die Produkte sollten möglichst inert sein, um unerwünschte Nebenreaktionen im Innern der Elektrode und auch nach Transport durch das Diaphragma ausserhalb der Elektrode zu vermeiden.

Zu diesem Zweck wurden verschiedene Verbindungsklassen experimentell untersucht.

### Beispiel 2:

Geeignet sind beispielsweise Verbindungen wie 1,3-Diphenyltriacene. 1,3-Diphenyltriacene reagieren bei erhöhter Temperatur unter Abspaltung von N₂.

In die oben beschriebene Referenzelektrode wurden 4 ml KCL-Gel eingeführt. Auf die Oberfläche 17 des Elektrolyten 12 wurde eine O-ringdichtung 18 aus Silikon aufgelegt. In den darüber gebildeten Hohlraum 14 wurde 110 mg Diphenyltriacene eingefügt. Der Hohlraum 14 wurde anschliessend durch Verschmelzen des Gehäuses 11 verschlossen. Durch Erhitzung der Elektrode auf 135°C während 60 min. wurde (nach erneuter Abkühlung) ein Überdruck von 0,54 bar im Hohlraum erzeugt.

### Beispiel 3

Organische Carbonsäuren neigen mehr oder weniger leicht zur Abspaltung von CO2. Es sind eine grosse Anzahl von Carbonsäuren bekannt, die zum Teil bereits bei Zimmertemperatur oder bei mehr oder weniger erhöhter Temperatur von selbst oder unter dem Einfluss von sauren, meist aber basischen Katalysatoren unter Abspaltung von Kohlendioxid zerfallen.

Diese als Decarboxylierung bezeichnete Grundreaktion kann verwendet werden, um den Hohlraum 14 oberhalb des Elektrolyten in der Referenzelektrode 10 zu bedrucken. Im Hinblick auf Applikation und Temperaturbereich haben sich organische Dicarbonsäuren als besonders geeignet erwiesen.

In Beispiel 3 wurde 100 mg Malonsäure mit 12 g KCL-Gel vermischt und in das Gehäuse 11 einer Referenzelektrode 10 eingegeben. Bei einer Temperatur von 135° findet die Zersetzungsreaktion der Malonsäure statt. Durch Erhitzung der Elektrode auf 135°C während 12 Min. entsteht ein Überdruck von 0.70 bar: bei einer Dauer von 20 Min. steigt der Druck auf 1.1 bar. Dadurch kann im gasdicht verschlossenen Hohlraum 14 der gewünschte Überdruck erzeugt werden.

Die eingesetzte Malonsäure (Fluka 63301) mit einem Gehalt von > = 98% wurde im oberen Drittel der KCl-Paste als Pulver plaziert. Die Druckmessung erfolgte mit einem, vor jedem Messzyklus kalibrierten, Drucksensor ED 513 der Firma Haenni AG, welcher auf dem Gehäuse 11 montiert wurde.

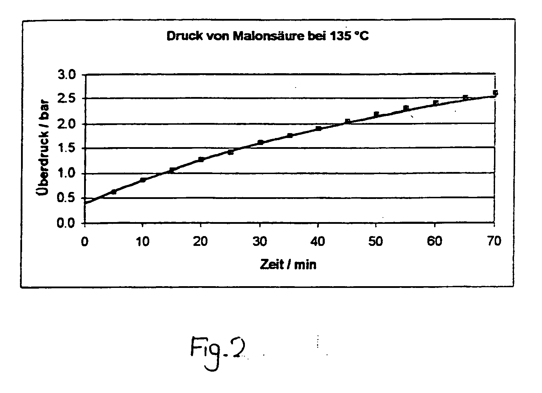

Der Druck wurde kontinuierlich während der Erhitzung registriert und in der Abbildung 2 als Überdruck bezogen zum Atmosphärendruck bei Raumtemperatur aufgezeichnet.

### Beispiel 4

Anstatt wie in Beispiel 3 die Malonsäure mit dem Elektrolytgel zu vermischen wurde auf der Oberfläche 17 des Elektrolytgels eine Dichtung 18 angeordnet und die Malonsäure wurde als Pressling in den Hohlraum 14 plaziert. Anschliessend wurde der Hohlraum 14 gasdicht verschlossen.

In Figur 2 ist der Druckverlauf bei einer Zersetzung von Malonsäure bei 135° Celsius dargestellt. Innerhalb von 70 Minuten erhöht sich der Überdruck unter Berücksichtigung der Wäremeausdehnung des Gases von knapp 0,5 auf 2,5 Bar.

Gemäss der Erfindung ist es möglich, einen gewünschten Druck innerhalb einer Elektrode zu erzeugen. Der Druck kann über einen weiten Bereich variiert werden. Da die Zersetzung der Malonsäure nicht vollständig abläuft, sondern ein Gleichgewicht und ein konstanter Druck erreicht wird, ist ein besonderer Vorteil der Erfindung, dass der Druck jederzeit erneuert werden kann.

Typischerweise werden in der Biotechnologie bei Fermentationen solche Elektroden um die 20 Mal unter gleichen Bedingungen (typischerweise während 30 Minuten und 121° bzw. 131° Celsius) autoklaviert. Die Menge des aktivierbaren chemischen Systems wird so dosiert, dass während mindestens 20 Zyklen jederzeit der notwendige Überdruck durch eine Temperaturbeaufschlagung von 120° bzw. 131° während 30 Minuten wieder erzeugt wird. Bei jeder Messung bestehen daher annähernd optimale Betriebsbedingungen. Die Erneuerung erfolgt auf Grund der erhöhten Temperatur beim Autoklavieren automatisch.

Eine Kontamination der Elektroden beim Sterilisieren kann dadurch vermieden werden.

Ein Vorteil der Erfindung besteht auch darin, dass bei der Betriebstemperatur von 37° die Druckerzeugung nicht ausgelöst wird. Die Elektrode ist zudem auch ohne Aktivierung als normale Gelelektrode einsetzbar.

## Patentansprüche

1. Referenzelektrode (10) mit einem Gehäuse (11) aus einem gasdichten Material, insbesondere aus Glas, Kunststoff oder einem Keramikmaterial.
welches teilweise mit einem gel- oder pastenförmigen Elektrolyten (12) gefüllt ist, der über ein Diaphragma (13) im Gehäuse (11) in Kontakt mit einem Messmedium (M) bringbar ist,
wobei im Gehäuse (11) ein in Kontakt mit dem Elektrolyten (12) stehender Hohlraum (14) angeordnet ist, **dadurch gekennzeichnet, dass** der Hohlraum (14) gasdicht verschlossen ist und dass im Innern des Gehäuses (11) Mittel (15) zum Erzeugen eines Überdrucks vorgesehen sind, wobei die Mittel (15) zum Erzeugen eines Überdrucks aus einem aktivierbaren chemischen System bestehen, das bei Aktivierung ein Gas abspaltet.

2. Referenzelektrode nach Anspruch 1, **dadurch gekennzeichnet, dass** das aktivierbare chemische System (15) durch Energiezufuhr und/oder durch in Kontakt bringen mit einer chemischen Verbindung aktivierbar ist.

3. Referenzelektrode nach Anspruch 2, **dadurch gekennzeichnet, dass** das System durch Zufuhr von thermischer, elektrischer oder elektromagnetischer Energie aktivierbar ist.

4. Referenzelektrode nach Anspruch 3, **dadurch gekennzeichnet, dass** die Mittel zum Erzeugen eines Überdrucks derart ausgewählt sind, dass ein Überdruck von 0,5 bis 2 Bar erzeugbar ist.

5. Referenzelektrode nach einem der Ansprüche 2 bis 4, **dadurch gekennzeichnet, dass** das chemische System derart ausgewählt ist, dass als Gas wenigstens ein inertes Gas wie z.B. CO2 oder N2 abgespalten wird.

6. Referenzelektrode nach einem der Ansprüche 1 bis 5, **dadurch gekennzeichnet, dass** das chemische System derart ausgewählt ist, dass die nach der Abspaltung des Gases entstehenden Reaktionsprodukte ungiftig sind.

7. Referenzelektrode nach Anspruch 3, **dadurch gekennzeichnet, dass** das chemische System derart ausgewählt ist, dass es bei einer Temperatur von 100° bis 140° aktivierbar ist.

8. Referenzelektrode nach einem der Ansprüche 1 bis 7, **dadurch gekennzeichnet, dass** das chemische System Stoffe aus der Gruppe von Diphenyltriacene und organischen Carbonsäuren, insbesondere Di-Carbonsäuren wie Malonsäure enthält.

9. Referenzelektrode nach einem der Ansprüche 1 bis 8, **dadurch gekennzeichnet, dass** das chemische System mit dem Elektrolyt (12) vermischt ist.

10. Referenzelektrode nach einem der Ansprüche 2 bis 9, **dadurch gekennzeichnet, dass** das chemische System im Hohlraum (14) angeordnet ist.

11. Messkette (1) mit einer Messelektrode (2) und mit einer Referenzelektrode (10) nach einem der Ansprüche 1-10.

12. Verfahren zum Herstellen einer Referenzelektrode (10) insbesondere nach einem der Ansprüche 1 bis 10, **gekennzeichnet durch** die Schritte
- Bereitstellen eines Gehäuses (11) aus einem gasdichten Material, insbesondere aus Glas oder - Kunststoff, welches Gehäuse ein Diaphragma (13) zum in Kontakt bringen eines Elektrolyten (12) mit einem Messmedium (M) aufweist,
- teilweise Befüllen des Gehäuses (11) mit einem gel- oder pastenförmigen Elektrolyten (12), so dass oberhalb des Elektrolyten (12) ein Hohlraum (14) im Gehäuse (11) bleibt,
- Einfüllen von Mitteln (15) zum Erzeugen eines Überdrucks in das Gehäuse (11), die aus einem aktivierbaren chemischen System bestehen, das bei Aktivierung ein Gas abspaltet,
- gasdichtes Verschliessen des Hohlraums (14).

13. Verfahren nach Anspruch 12, **dadurch gekennzeichnet, dass** der Hohlraum durch Zuschmelzen des Gehäuses verschlossen wird.

14. Verfahren nach einem der Ansprüche 12 oder 13, **gekennzeichnet durch** den weiteren Schritt,
Aktivieren der Mittel zum Erzeugen eines Überdrucks nach dem gasdichten Verschliessen des Hohlraums (14).

15. Verfahren nach einem der Ansprüche 12 bis 14, **dadurch gekennzeichnet, dass** ein Elektrolyt (12) in das Gehäuse (11) eingefüllt wird und dass anschliessend die Mittel (15) zum Erzeugen eines Überdrucks in den Hohlraum (14) eingefüllt werden, wobei vorzugsweise auf der Oberfläche (17) des Elektrolyten (12) Dichtmittel (18) angebracht werden.

16. Verfahren nach einem der Ansprüche 12 bis 15, **dadurch gekennzeichnet, dass** die Mittel zum Erzeugen eines Überdrucks vor dem Befüllen mit dem Elektrolyt (12) vermischt und gleichzeitig mit dem Elektrolyt (12) in das Gehäuse (11) eingefüllt werden.

## Claims

1. Reference electrode (10) with a housing (11) of a gastight material, in particular of glass, plastic or a ceramic material,
which is partly filled with an electrolyte (12) in the form of a gel or paste and can be brought into contact with a measuring medium (M) by way of a diaphragm (13) in the housing (11), a cavity (14) that is in contact with the electrolyte (12) being arranged in the housing (11), **characterized in that** the cavity (14) is closed in a gastight manner and **in that** means (15) for generating a positive pressure are provided in the interior of the housing (11), the means (15) for generating a positive pressure comprising an activatable chemical system which when activated releases a gas.

2. Reference electrode according to Claim 1, **characterized in that** the activatable chemical system (15) can be activated by supplying energy and/or by bringing it into contact with a chemical compound.

3. Reference electrode according to Claim 2, **characterized in that** the system can be activated by supplying thermal, electrical or electromagnetic energy.

4. Reference electrode according to Claim 3, **characterized in that** the means for generating a positive pressure are selected such that a positive pressure of 0.5 to 2 bar can be generated.

5. Reference electrode according to one of Claims 2 to 4, **characterized in that** the chemical system is selected such that at least one inert gas, such as CO2 or N2 for example, is released as the gas.

6. Reference electrode according to one of Claims 1 to 5, **characterized in that** the chemical system is selected such that the reaction products produced after the release of the gas are non-toxic.

7. Reference electrode according to Claim 3, **characterized in that** the chemical system is selected such that it can be activated at a temperature from 100° to 140°.

8. Reference electrode according to one of Claims 1 to 7, **characterized in that** the chemical system contains a substance from the group comprising diphenyltriazenes and organic carboxylic acids, in particular dicarboxylic acids such as malonic acid.

9. Reference electrode according to one of Claims 1 to 8, **characterized in that** the chemical system is mixed with the electrolyte (12).

10. Reference electrode according to one of Claims 2 to 9, **characterized in that** the chemical system is arranged in the cavity (14).

11. Measurement chain (1) with a measuring electrode (2) and with a reference electrode (10) according to one of Claims 1-10.

12. Method for producing a reference electrode (10), in particular according to one of Claims 1 to 10, **characterized by** the steps of
- providing a housing (11) of a gastight material, in particular of glass or plastic, which housing has a diaphragm (13) for bringing an electrolyte (12) into contact with a measuring medium (M),
- partly filling the housing (11) with an electrolyte (12) in the form of a gel or paste, so that a cavity (14) remains in the housing (11) above the electrolyte (12),
- filling into the housing (11) means (15) for generating a positive pressure, which comprise an activatable chemical system which when activated releases a gas,
- closing the cavity (14) in a gastight manner.

13. Method according to Claim 12, **characterized in that** the cavity is closed by sealing the housing by fusion.

14. Method according to either of Claims 12 or 13, **characterized by** the further step of activating the means for generating a positive pressure after the gastight closing of the cavity (14).

15. Method according to one of Claims 12 to 14, **characterized in that** an electrolyte (12) is filled into the housing (11) and **in that** the means (15) for generating a positive pressure are subsequently filled into the cavity (14), sealing means (18) preferably being provided on the surface (17) of the electrolyte (12).

16. Method according to one of Claims 12 to 15, **characterized in that** the means for generating a positive pressure are mixed with the electrolyte (12) before filling and are filled into the housing (11) at the same time as the electrolyte (12).

## Revendications

1. Electrode de référence (10) comportant un logement (11) constitué d'un matériau étanche au gaz, notamment du verre, du plastique ou un matériau céramique qui est partiellement rempli d'un électrolyte (12) sous forme gélifiée ou pâteuse, lequel peut être amené par l'intermédiaire d'un diaphragme (13) dans le logement (11) en contact avec un milieu de mesure (M), un espace creux (14) en contact avec l'électrolyte (12) étant disposé dans le logement (11), **caractérisée en ce que** l'espace creux (14) est obturé de manière étanche au gaz et **en ce que**, à l'intérieur du logement (11), des moyens (15) pour produire une surpression sont prévus, les moyens (15) pour produire une surpression étant constitués d'un système chimique activable, qui dissocie un gaz lors de l'activation.

2. Electrode de référence selon la revendication 1, **caractérisée en ce que** le système chimique activable (15) peut être activé en l'alimentant en énergie et/ou en l'amenant en contact avec une liaison chimique.

3. Electrode de référence selon la revendication 2, **caractérisée en ce que** le système peut être activé en l'alimentant en énergie thermique, électrique ou électromagnétique.

4. Electrode de référence selon la revendication 3, **caractérisée en ce que** les moyens pour produire une surpression sont choisis de telle sorte qu'une surpression comprise entre 0,5 et 2 bar puisse être produite.

5. Electrode de référence selon une des revendications 2 à 4, **caractérisée en ce que** le système chimique est choisi de telle sorte que comme gaz, au moins un gaz inerte comme par exemple du CO2 ou du N2 soit dissocié.

6. Electrode de référence selon une des revendications 1 à 5, **caractérisée en ce que** le système chimique est choisi de telle sorte que les produits de réaction générés après la dissociation du gaz soient atoxiques.

7. Electrode de référence selon la revendication 3, **caractérisée en ce que** le système chimique est choisi de telle sorte qu'il puisse être activé à une température de 100° à 140°.

8. Electrode de référence selon une des revendications 1 à 7, **caractérisée en ce que** le système chimique contient des substances du groupe du diphényltriazène et des acides carboniques organiques, notamment des acides dicarboniques comme l'acide malonique.

9. Electrode de référence selon une des revendications 1 à 8, **caractérisée en ce que** le système chimique est mélangé à l'électrolyte (12).

10. Electrode de référence selon une des revendications 2 à 9, **caractérisée en ce que** le système chimique est disposé dans l'espace creux (14).

11. Chaîne de mesure (1) comportant une électrode de mesure (2) et comportant une électrode de référence (10) selon une des revendications 1 à 10.

12. Procédé de fabrication d'une électrode de référence (10), notamment selon une des revendications 1 à 10, **caractérisé par** les étapes consistant à
- fournir un logement (11) constitué d'un matériau étanche au gaz, notamment en verre ou en plastique, lequel logement présente un diaphragme (13) afin d'amener en contact un électrolyte (12) avec un milieu de mesure (M),
- remplir partiellement le logement (11) avec un électrolyte (12) sous forme gélifiée ou pâteuse de telle sorte que, au dessus de l'électrolyte (12), un espace creux (14) subsiste dans le logement (11),
- remplir le logement (11) par des moyens (15) pour produire une surpression, lesquels sont constitués d'un système chimique activable, qui dissocie un gaz lors de l'activation,
- obturer de manière étanche au gaz l'espace creux (14).

13. Procédé selon la revendication 12, **caractérisé en ce que** l'espace creux est obturé par fusion conjointe du logement.

14. Procédé selon une des revendications 12 ou 13, **caractérisé par** l'étape supplémentaire consistant à :
- activer les moyens pour produire une surpression après l'obturation étanche au gaz de l'espace creux (14).

15. Procédé selon une des revendications 12 à 14, **caractérisé en ce qu'**un électrolyte (12) est introduit dans le logement (11) et **en ce que** les moyens (15) pour produire une surpression sont ensuite introduits dans l'espace creux (14), des moyens d'étanchéité (18) étant de préférence appliqués sur la surface (17) de l'électrolyte (12).

16. Procédé selon une des revendications 12 à 15, **caractérisé en ce que** les moyens pour produire une surpression sont mélangés à l'électrolyte (12) avant le remplissage et sont introduits simultanément à l'électrolyte (12) dans le logement (11).
